# EUROPEAN PATENT APPLICATION

(11) **EP 2 547 110 A2**
(43) Date of publication of application: **16.01.2013**
(21) Application number: 12159319.8
(22) Date of filing: 13.03.2012
(51) Int. Cl.: H04N 13/00

(54) **Image processing apparatus and control method thereof**

(30) Priority: 12.07.2011 KR 20110068861
(71) Applicant: Samsung Electronics Co., Ltd., Suwon-si, Gyeonggi-do, 443-742 (KR)
(72) Inventor: Choi, Byoung-jin, Gyeonggi-do (KR)
(74) Representative: Robinson, Ian Michael

(57) **Abstract**

An image processing apparatus and control method are provided. The image processing apparatus includes an image processor which processes a first stream and a second stream different in an attribute from each other for displaying an image; and a controller which controls the image processor to convert the first stream so that the attribute of the first stream matches the attribute of the second stream, and output the image to be displayed based on the converted first stream and the second stream.

## Description

### BACKGROUND

### 1. Field

Apparatuses and methods consistent with the exemplary embodiments relate to an image processing apparatus and a control method thereof, and more particularly to an image processing apparatus, which receives a stream and processes an image based on the received stream to be displayed, and a control method thereof.

### 2. Description of the Related Art

A television (TV), a set-top box, a personal video recorder (PVR), a digital video recorder (DVR), a personal computer (PC), a portable terminal, or the like image processing apparatus receives a stream of serial data and processes an image based on the received stream to be displayed. For example, such a stream may be received through a broadcasting signal of a digital television (DTV).

In other situations, two or more steams may be used. For example, the image processing apparatus may receive and process two streams respectively corresponding to a left-eye image and a right-eye image for a three-dimensional (3D) image, and thus display the 3D image. Additional streams may provide additional information.

Occasionally, the two or more streams may have attributes different from each other. There thus may be a disadvantage in that processing and displaying two or more streams that have different attributes becomes difficult. For example, if images of two or more streams each have a different video format, both are different in indexing components and therefore a function such as searching, multi-speed playback, etc. may not be properly performed.

### SUMMARY

According to the present invention there is provided an apparatus and method as set forth in the appended claims. Other features of the invention will be apparent from the dependent claims, and the description which follows.

One or more exemplary embodiments provide an image processing apparatus and a control method thereof, in which various display functions can be smoothly performed in receiving and processing two or more streams each having different attributes from each other.

According to an aspect of an exemplary embodiment, there is provided an image processing apparatus including: an image processor which processes a first stream and a second stream different in an attribute from each other for displaying an image; and a controller which controls the image processor to convert the first stream so that the attribute of the first stream matches the attribute of the second stream, and output the image to be displayed based on the converted first stream and the second stream.

The image processing apparatus may further include a signal receiver which receives a video signal comprising the first stream and the second stream.

The image may comprise a left-eye image and a right-eye image for a three-dimensional (3D) image, and the first stream corresponds to one of the left-eye image and the right-eye image and the second stream corresponds to the other one of the left-eye image and the right-eye image.

The image processing apparatus may further include a storage unit which stores the converted first stream and the second stream, and the image processor may process the converted first stream and the second stream stored in the storage unit.

The controller may control the second stream to be stored directly, and the converted first stream to be stored after conversion.

The first stream that is converted may have a smaller data amount than the second steam.

The controller may control reference information which corresponds to the matched attribute and is used for playback of the image to be stored in the storage unit when performing the conversion, and the image processor may process the image to be displayed based on the stored reference information.

The reference information may include information about at least one of a starting point of a reference frame of the image and an interval between the reference frames.

The attribute may comprise at least one of a video format and a bit rate.

The image processing apparatus may further include a display unit which displays the image.

According to an aspect of another exemplary embodiment, there is provided a control method of an image processing apparatus, the method including: receiving a video signal comprising a first stream and a second stream different in an attribute from each other for displaying an image; converting the first stream so that the attribute of the first stream matches the attribute of the second stream; and performing image processing to display the image based on the converted first stream and the second stream.

The image may include a left-eye image and a right-eye image for a 3D image, and the first stream may correspond to one of the left-eye image and the right-eye image, and the second stream may correspond to the other one of the left-eye image and the right-eye image.

The method may further include storing the converted stream and the other stream in a storage unit, and the performing the image processing may comprise processing the converted first stream and the second stream that are stored in the storage unit.

The storing may include storing the second stream directly, and storing the converted first stream after conversion.

The first stream that is converted may have a smaller data amount than the second steam.

The storing may include storing reference information that corresponds to the matched attribute and is used for playback of the image in the storage unit when performing the conversion, and the performing the image processing may comprise processing the image to be displayed based on the stored reference information.

The reference information may include information about at least one of a starting point of a reference frame of the image and an interval between the reference frames.

The attribute may include at least one of a video format and a bit rate.

The method may further include displaying the image.

According to an aspect of another exemplary embodiment, there is provided a three dimensional image processing apparatus including: a receiver that receives a video signal comprising a first stream having a first video attribute, and a second stream having a second video attribute that is different than the first video attribute; an image processor that processes the first stream and the second stream; and a controller that controls the image processor to transcode the first stream such that the first video attribute matches the second video attribute of the second stream; and that outputs an image based on the transcoded first stream and the second stream.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of an image processing apparatus according to an exemplary embodiment;
FIGS. 2 and 3 are flowcharts showing exemplary operations according to an exemplary embodiment of the image processing apparatus shown in FIG. 1; and
FIG. 4 is a block diagram of an example of a detailed configuration of an image processor of the image processing apparatus shown in FIG. 1 according to an exemplary embodiment.

### DETAILED DESCRIPTION

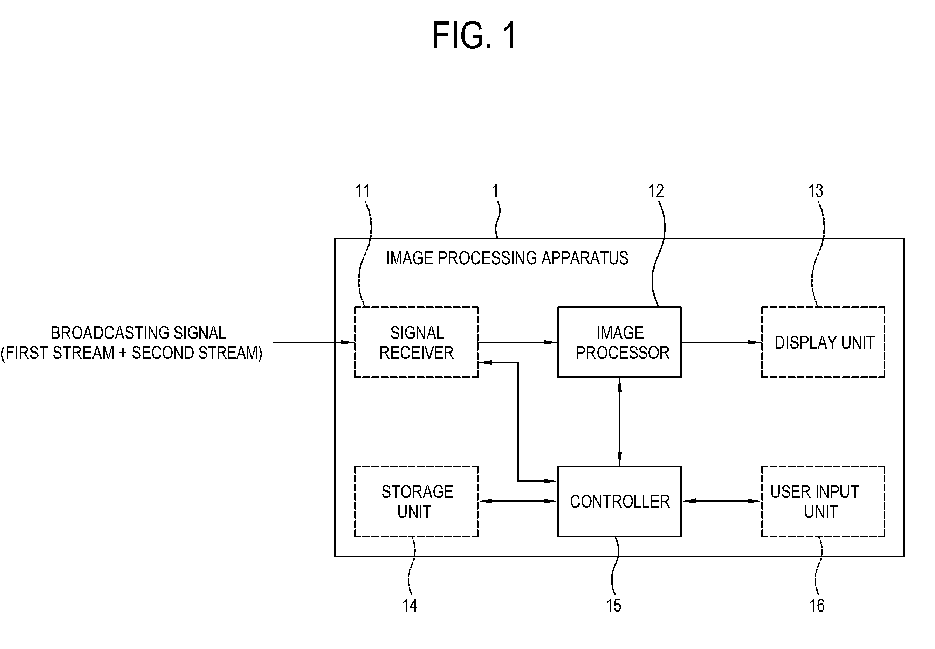

Hereinafter, exemplary embodiments will be described in detail. FIG. 1 is a block diagram of an image processing apparatus according to an exemplary embodiment. The image processing apparatus 1 may be a TV, a set-top box, a PC, a portable terminal, or the like. The present inventive concept may be applied to any device capable of receiving an processing broadcast signal streams. As shown in FIG. 1, the image processing apparatus 1 may include a signal receiver 11, an image processor 12, a display unit 13, a storage unit 14 and a controller 15.

The signal receiver 11 receives a video signal containing information about an image. The video signal includes a broadcasting signal. For example, the broadcasting signal may be a digital television (DTV) broadcasting signal based on advanced television systems committee (ATSC) standards. The broadcasting signal may be a broadcasting signal corresponding to one of a plurality of channels. A channel includes a physical channel and a virtual channel. The signal receiver 11 may receive a broadcasting signal corresponding to one channel selected by a user among the plurality of channels under control of the controller 15.

An image based on the broadcasting signal includes a 3D image. The 3D image may include a left-eye image and a right-eye image to be alternately displayed. The broadcasting signal may be received in the form of a stream including a series of data. For example, the stream of the broadcasting signal includes a transport stream based on motion picture experts group 2 (MPEG2) standards. The broadcasting signal may include two or more streams. For example, the broadcasting signal may include two streams respectively corresponding to the left-eye image and the right-eye image for the 3D image (hereinafter, respectively referred to as a 'first stream' and a 'second stream').

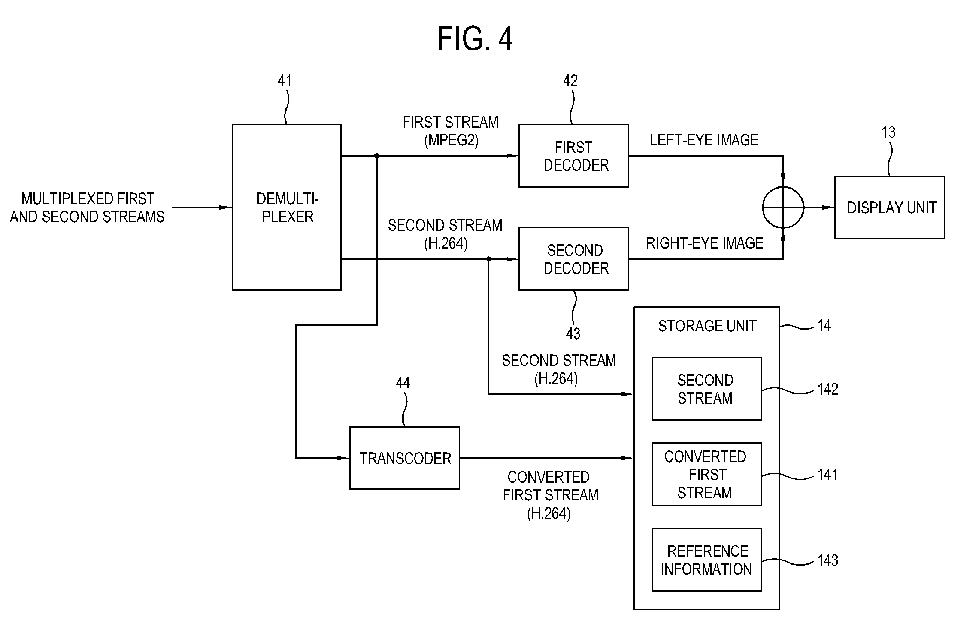

The image processor 12 performs processes for an image to be displayed based on the stream of the broadcasting signal received by the signal receiver 11. The processes performed by the image processor 12 may include demultiplexing, decoding, transcoding, scaling, etc. Referring to FIG. 4, the image processor 12 may include a demultiplexer 41, a first decoder 42 and a second decoder 43. In the case of the broadcasting signal where the first stream and the second stream respectively corresponding to the left-eye image and the right-eye image for the 3D image is multiplexed, the demultiplexer 41 divides the broadcasting signal into the first stream and the second stream. The first decoder 42 decodes the first steam to output the left-eye image, and the second decoder 43 decodes the second stream to output the right-eye image. The decoded left- and right-eye images are alternately displayed by the display unit 13. The processes performed by the image processor 12 will be in detail described later.

The display unit 13 displays an image based on information about the stream processed by the image processor 12. There is no limit to a display method of the display unit 13. For example, the display unit 13 may include a liquid crystal display (LCD), a plasma display panel (PDP), a projection, an organic light emitting diode (OLED), etc.

The storage unit 14 stores the information about the stream processed by the image processor 12. The storage unit 14 may include a nonvolatile memory such as a flash memory, a hard disk drive, etc.

The controller 15 generally controls the image processing apparatus 1. The controller 15 controls the signal receiver 11 to receive a broadcasting signal corresponding to one channel selected by a user among the plurality of channels. The controller 15 controls the image processor 12 and the display unit 13 to process and display a video signal received by the signal receiver 11.

The controller 15 may include a nonvolatile memory (not shown) where a control program is stored, a volatile memory (not shown) to which at least a part of the control program is loaded, and a microprocessor (not shown) for executing the loaded control program.

The image processing apparatus 1 may further include a user input unit 16 that receives a user's input. The user input unit 16 may be provided in the form of a separate device such as a remote controller, or in the form of a control panel in a main body (not shown) of the image processing apparatus 1. A user's input includes selection of a channel, storage of a received image, playback of the stored image, etc.

Many different configurations of the above-described elements are contemplated. For example, the above image processing apparatus 1 includes the signal receiver 11, the image processor 12, the display unit 13, the storage unit 14, the controller 15, and the user input unit 16 together in one apparatus as shown in FIG. 1. However, according to another exemplary embodiment, the image processing apparatus may exclude at least one of the signal receiver 11, the display unit 13 and the storage unit 14. These elements are indicated in FIG. 1 with dashed outlines to show that they may be excluded. In such a case, the element or elements excluded in the image processing apparatus may be provided as a separate device, and the image processing apparatus may operate as connecting with the separate device.

Below, stream conversion performed by the image processing apparatus 1 according to an exemplary embodiment will be described in detail. Two or more streams of the broadcasting signal received by the signal receiver 11 may be different in attributes from each other. For example, the first and second streams respectively corresponding to the left-eye and right-eye images for the 3D image may be have different attributes from each other. The attributes of the stream may include a video format, a bit rate (sampling rate), etc. For example, if the first stream and the second stream are different in the video format, the first stream may for example be based on MPEG2 but the second stream may be based on H.264 (refer to FIG. 4).

The controller 15 controls the image processor 12 to convert one of the first and second streams so that the attributes of the first stream and the second stream can be matched with each other. That is, the controller 15 converts the attribute of one of the first and second streams to be matched with the attribute of the other one. As shown in FIG. 4, the image processor 12 may further include a transcoder 44 for performing conversion with respect to one of the first and second streams. The stream to be converted may be selected as a stream that has a data amount which is smaller than a data amount of the other streams. For instance, if the first stream has a format of MPEG2 and the second stream has a format of H.264, the transcoder 44 may convert the first stream that is based on MPEG2 to have a format of H.264. Thus, the stream having a smaller data amount is converted and stored, so that a storage space of the storage unit 14 can be saved.

The converted first steam and the second stream are stored in the storage unit 14. For example, the converted first stream 141 converted to have the format of H.264 is stored in the storage unit 14. On the other hand, the second stream 142 having the format of H.264 is directly stored in the storage unit 14 without undergoing the conversion. The stored converted first stream 141 and the storage second stream 142 may be used in playing an image back. For instance, if a recording function for an image is selected, the second stream and the converted first stream are stored in the storage unit 14. Then, if a playback function for the recorded image is selected, an image is played back based on the second stream 142 and the converted first stream 141 stored in the storage unit 14. The controller 15 controls the image processor 12 to perform the processes for displaying an image based on the playback function with regard to the second stream 142 and the converted first stream 141 stored in the storage unit 14.

As above, according to an exemplary embodiment, an image is played back based on the second stream 142 and the converted first stream 141 having the matched attribute, so that the image can be smoothly played back without any problem due to unmatched attributes.

The storage unit 14 may further store reference information 143 for playing an image back based on the second stream 142 and the converted first stream 141. The reference information 143 may for example include information about at least one of a starting point of a reference frame of an image and an interval between the reference frames. The reference frame denotes a frame criterion for indexing a series of frames constituting an image, and for example the reference information 143 may include information about group of picture (GOP), I frame, etc. In the case of searching, multi-speed playback, etc. for an image based on the second stream 142 and the converted first stream 141, the image processor 12 performs the corresponding process based on the reference information 143 stored in the storage unit 14.

The controller 15 may store the reference information 143 corresponding to the matched attribute of the second stream 142 and the converted first stream 141 in the storage unit 14. For example, the reference information 143 may correspond to the matched attribute, i.e., the format of H.264, in the above example. Further, the reference information 143 may be stored in the form of a file. The reference information 143 may be provided as one file with respect to the second stream 142 and the converted first stream 141. The controller 15 may store the reference information 143 in the storage unit 14, when converting the first stream, i.e., when storing the second stream 142 and the converted first stream 141.

As above, according to an exemplary embodiment, the searching, the multi-speed playback, etc. of the second stream 142 and the converted first stream 141 are performed using one reference information 143 corresponding to the matched attribute, so that the functions can be more smoothly carried out.

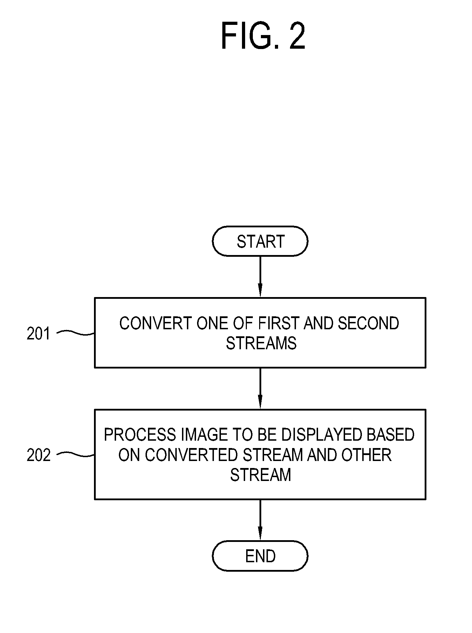

FIG. 2 is a flowchart showing an exemplary operation of the image processing apparatus 1 shown in FIG. 1 and 4. First, at operation 201, the image processing apparatus 1 converts one of the first and second streams. The converted stream allows the attributes of the first and second streams to be matched with each other. Then, at operation 202, the image processing apparatus 1 processes an image to be displayed based on the converted stream and the other stream. For example, if the first stream is converted, the image processing apparatus processes the image to be displayed based on the second stream which is not converted, and the converted first stream.

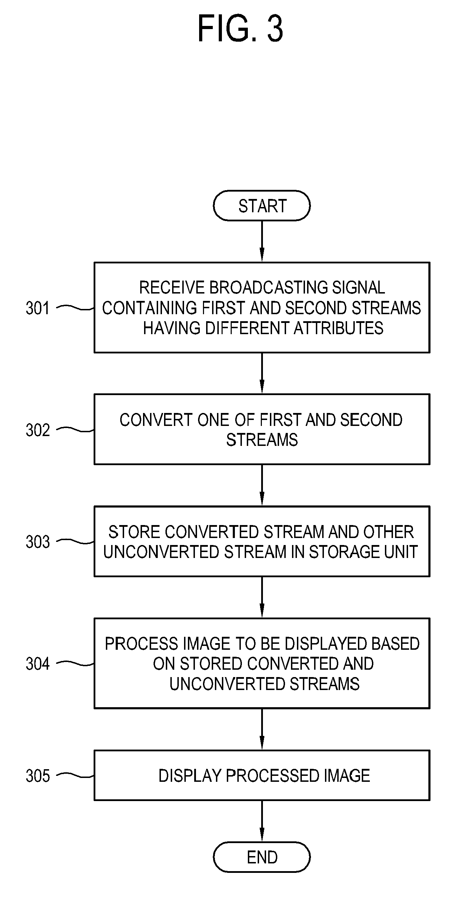

FIG. 3 is a flowchart showing another exemplary operation of the image processing apparatus 1 shown in FIG. 1 and 4. First, at operation 301, the image processing apparatus 1 receives a broadcasting signal containing the first and second streams each having different attributes. Then, at operation 302, the image processing apparatus 1 converts one of first and second streams so that the attributes. The converted stream allows the attributes of the first and second streams to be matched with each other. At operation 303, the image processing apparatus stores the converted stream and the other non-converted stream in the storage unit 14. At operation 304, the image processing apparatus 1 process an image to be displayed based on the stored converted stream and the stored non-converted stream. At operation 305, the image processing apparatus 1 displays the processed image on the display unit 13.

As described above, various display functions such as searching, multi-speed playback, etc. can be smoothly performed in receiving and processing two or more streams having different attributes from each other.

Although the case of two streams has been described above, one of ordinary skill in the art will understand that the present inventive concept may be applied to three or more streams. For example, in the case of three streams, two streams would each be converted to match the attribute of the third stream.

Additionally, in the foregoing exemplary embodiments, H.264, MPEG2 and the like video formats were described as the attributes of the first and second streams, but the present inventive concept is not limited thereto. Alternatively, if the first stream and the second stream are different in a bit rate from each other, the bit rate of one of the first and second streams may be converted to be matched with the bit rate of the other one, thereby standardizing the indexing components so that the searching, the play back and the like functions can be properly carried out.

Also, the first and second streams different in the attribute from each other are not limited to the case that they are received through a broadcasting signal of one channel. Alternatively, the present inventive concept may be equally applied to a case that the first and second streams having different attributes from each other are respectively received through broadcasting signals of different channels. Further, not only the first and second streams having different attributes from each other are received through the same broadcasting signal or the same kind of broadcasting signal, but also the first stream may be received through the broadcasting signal and the second stream may be received through a network such as Internet. In this case, the image processing apparatus may further include a network receiver (not shown) for receiving the second stream.

Although a few preferred embodiments have been shown and described, it will be appreciated by those skilled in the art that various changes and modifications might be made without departing from the scope of the invention, as defined in the appended claims.

## Claims

1. An image processing apparatus comprising:
a signal receiver which receives a video signal comprising a first stream and a second stream different in an attribute from each other for displaying an image;
an image processor which processes the first stream and the second stream; and
a controller which controls the image processor to convert one of the first and second streams so that the attributes of the first and second streams can be matched with each other, and display the image based on the converted first stream, and the second stream.

2. The image processing apparatus according to claim 1, wherein the image comprises a left-eye image and a right-eye image for a 3D image, and
the first stream and the second stream correspond to the left-eye image and the right-eye image, respectively.

3. The image processing apparatus according to claim 1 or 2, further comprising a storage unit which stores the converted first stream, and the second stream,
wherein the image processor processes the first and second streams stored in the storage unit.

4. The image processing apparatus according to claim 3, wherein the controller controls one stream of the first stream and the second stream to be stored directly, and the other stream to be converted to have an attribute of the one stream and then stored.

5. The image processing apparatus according to claim 4, wherein the other stream to be converted has a smaller data amount than the one steam.

6. The image processing apparatus according to any of claims 3 to 5, wherein the controller controls reference information corresponding to the matched attribute for playback of the image to be stored in the storage unit when performing the conversion, and
the image processor processes the image to be displayed based on the stored reference information.

7. The image processing apparatus according to claim 6, wherein the reference information comprises information about at least one of a starting point of a reference frame of the image and an interval between the reference frames.

8. The image processing apparatus according to any of claims 1 to 7, wherein the attributes of the first and second streams comprise at least one of a video format and a bit rate.

9. A control method of an image processing apparatus, the method comprising:
receiving a video signal comprising a first stream and a second stream different in an attribute from each other for displaying an image;
converting one of the first and second streams so that the attributes of the first and second streams can be matched with each other; and
performing image processing to display the image based on the converted first stream and the second stream.

10. The method according to claim 9, wherein the image comprises a left-eye image and a right-eye image for a 3D image, and
the first stream and the second stream correspond to the left-eye image and the right-eye image, respectively.

11. The method according to claim 9 or 10, further comprising storing the converted first stream and the second stream in a storage unit,
wherein the performing the image processing comprises processing the first and second streams stored in the storage unit.

12. The method according to claim 11, wherein the storing comprises storing one stream of the first stream and the second stream directly, and storing the other stream after being converted to have an attribute of the one stream.

13. The method according to claim 11 or 12, wherein the storing comprises storing reference information corresponding to the matched attribute for playback of the image in the storage unit when performing the conversion, and
the performing the image processing comprises processing the image to be displayed based on the stored reference information.

14. The method according to claim 13, wherein the reference information comprises information about at least one of a starting point of a reference frame of the image and an interval between the reference frames.

15. The method according to any of claims 9 to 14, wherein the attributes of the first and second streams comprise at least one of a video format and a bit rate.
